# EUROPEAN PATENT APPLICATION

(11) **EP 4 827 010 A1**
(43) Date of publication of application: **21.10.2026**
(21) Application number: 24915092.1
(22) Date of filing: 13.12.2024
(51) Int. Cl.: H04B 7/185

(54) **COMMUNICATION METHOD AND COMMUNICATION APPARATUS**

(30) Priority: 04.01.2024 CN 202410017058
(71) Applicant: Huawei Technologies Co., Ltd., Shenzhen, Guangdong 518129 (CN)
(72) Inventor: ZHANG, Xiaoyu, Shenzhen, Guangdong 518129 (CN); SHI, Meng, Shenzhen, Guangdong 518129 (CN); LIAO, Shuri, Shenzhen, Guangdong 518129 (CN); DOU, Shengyue, Shenzhen, Guangdong 518129 (CN); YANG, Liu, Shenzhen, Guangdong 518129 (CN)
(74) Representative: Pfenning, Meinig & Partner mbB
(86) International application number: PCT/CN2024/139024
(87) International publication number: WO 2025/145877

(57) **Abstract**

This application provides a communication method and a communication apparatus. The method includes: decoupling a system message that couples network configuration information of a serving satellite and network configuration information of a neighboring satellite, where a first system message includes the network configuration information of the serving satellite (a first network device), and a second system message includes the network configuration information of the neighboring satellite (a second network device). The first system message is sent in an entire service range of the serving satellite (a first area), and the second system message is sent only in an overlapping area between the serving satellite and the neighboring satellite (a second area). Therefore, system message sending overheads caused by sending a network configuration message of the neighboring satellite in a non-overlapping area are avoided, and a part of sending resources that may be used for sending data is saved, thereby improving data transmission efficiency.

## Description

This application claims priority to Chinese Patent Application No. 202410017058.0, filed with the China National Intellectual Property Administration on January 4, 2024 and entitled "COMMUNICATION METHOD AND COMMUNICATION APPARATUS", which is incorporated herein by reference in its entirety.

### TECHNICAL FIELD

This application relates to satellite networks, and more specifically, to a communication method and a communication apparatus.

### BACKGROUND

Non-terrestrial communication networks (non-terrestrial network, NTN), for example, satellite communication, have significant advantages such as global coverage, long-distance transmission, flexible networking, convenient deployment, and freedom from geographical conditions, and have been widely used various fields such as maritime communication, positioning and navigation, emergency rescue and disaster relief, scientific experiments, video broadcasting, and earth observation.

In a satellite communication system, the communication system delivers various system messages required for networks and access services to users via broadcast beams in different directions, to indicate configurations related to network communication. The system messages mainly include a master information block (master information block, MIB) and system message blocks (system information blocks, SIBs). SIBs may be classified according to carried content. For example, a SIB that carries main network configurations and access permission for a serving cell is defined as SIB1, a SIB that carries cell reselection configuration information is defined as SIB2, SIB4, or the like, and a SIB that carries auxiliary information such as a satellite ephemeris, timing advance (timing advance, TA), a reference point location, and a handover distance threshold is defined as SIB19. SIBs expect for SIB1 may be collectively referred to as other system messages (other system information, OSI).

Information like auxiliary access information and measurement configuration of a serving satellite and information like auxiliary access information and measurement configuration of neighboring satellites are respectively coupled to different types of SIB messages. How to send SIB messages is a problem urgently to be resolved.

### SUMMARY

This application provides a communication method, to enable a serving satellite to send system configuration information of a neighboring satellite only in a broadcast beam direction at a coverage edge, thereby reducing total sending overheads of system messages and improving system data transmission efficiency.

According to a first aspect, a communication method is provided. The method may be performed by a first network device, or may be performed by a chip or a circuit configured in the first network device. This is not limited in this application.

The method includes: broadcasting a first system message to a first area, where the first area is a coverage area served by the first network device, and the first system message is used by user equipment to perform, in the first area, at least one of access, beam management, and mobility measurement with the first network device; and broadcasting a second system message to a second area, where the second area includes an overlapping coverage area between the first network device and a second network device, the second system message is used by the user equipment to perform, in the second area, access and/or mobility measurement with the second network device, and the second system message is a message dedicated to the second area.

In this application, the first network device may be serving satellite or an access network device of the serving satellite. This is not limited in this application.

In this application, the user equipment may be a terminal device. This is not limited in embodiments of this application.

In this application, the second network device may be a neighboring satellite of the serving satellite or access network device of the serving satellite. The second network device may include one or more network devices. This is not limited in embodiments of this application.

In this application, an area may be understood as a geographical area covered by a satellite service, and different geographical areas correspond to different areas. For example, a geographical area #1 corresponds to the first area, and a geographical area #2 corresponds to the second area.

In this application, a coverage area of one network device may correspond to one or more cells. For example, the first network device hosts one cell, and provides a service for the first area via the cell. Alternatively, the first network device may host a plurality of cells, and provide a service for the first area via plurality of cells.

Currently, network configuration information (for example, auxiliary access information and measurement configuration information) of the serving satellite and network configuration information of the neighboring satellite are respectively coupled in a plurality of different types of system messages (SIBs). To ensure access and transmission of the serving satellite, the plurality of different types of system messages need to be sent in a satellite coverage area of the serving satellite. However, configuration information, in the system message, related to the neighboring satellite is usually used by user equipment in an overlapping area between the serving satellite and the neighboring satellite to perform access and mobile measurement. In this case, sending the system message in the entire coverage area of the serving satellite causes unnecessary system message sending overheads, and specific resources are occupied, affecting data transmission efficiency. In this application, the system message that couples the network configuration information of the serving satellite and the network configuration information of the neighboring satellite is decoupled, where the first system message includes the network configuration information of the serving satellite (the first network device), and the second system message includes the network configuration information of the neighboring satellite (the second network device). The first system message is sent in the entire service range of the serving satellite (the first area), and the second system message is sent only in the overlapping area between the serving satellite and the neighboring satellite (the second area). Therefore, system message sending overheads caused by sending a network configuration message of the neighboring satellite in a non-overlapping area are avoided, and a part of sending resources that may be used for sending data is saved, thereby improving data transmission efficiency.

With reference to the first aspect, in some implementations of the first aspect, the first system message includes auxiliary access information used by the first network device for NTN access, and configuration information used for synchronization signal measurement.

In this application, the auxiliary access information may be understood as auxiliary information required by the user equipment for accessing the first network device in NTN scenarios. In this application, the configuration information used for synchronization signal measurement is a synchronization signal measurement configuration in a beam management procedure of the first network device, or a synchronization signal measurement configuration in a mobility management procedure during cell reselection or switching.

In this solution, in the first system message, network configurations related to the serving satellite in SIB2/4 and SIB19 are reassembled into a new OSI message.

With reference to the first aspect, in some implementations of the first aspect, the first system message includes a first criterion, and the first criterion is used by the user equipment to determine whether the user equipment is in the second area.

For example, the first criterion may include at least one of a threshold of a distance to a reference point, a threshold of an angle to a reference point, and a synchronization signal block (synchronization signal block, SSB) index.

The first criterion may alternatively be sent by using another message, for example, a MIB message.

With reference to the first aspect, in some implementations of the first aspect, the second system message includes a second network device list, auxiliary access information used by the second network device for NTN access, configuration information used for cell reselection, and configuration information used for measuring a synchronization signal of the second network device.

In this application, the auxiliary access information of the second network device may be understood as auxiliary information required by the user equipment for accessing the second network device in the NTN scenario.

In this application, the configuration information used for cell reselection may include a parameter regarding whether to perform cell reselection.

In this application, the configuration information used for measuring the synchronization signal of the second network device may be understood as a configuration related to measuring the synchronization signal of the second network device by the user equipment.

In this solution, in the first system message, network configurations related to the neighboring satellite in SIB2/4 and SIB19 are reassembled into a new OSI message.

With reference to the first aspect, in some implementations of the first aspect, the first system message further includes a time-frequency resource configuration on a link between the first network device and the user equipment, access permission for the first network device, and a first scheduling indication, and the first scheduling indication is used for scheduling the second system message.

In this solution, in addition to the network configuration related to the serving satellite in SIB2/4 and SIB19, the first system message further includes content in SIB1, and a new SIB message is reassembled.

The first scheduling indication includes scheduling information and search space for the second system message.

The first system message may be scheduled and indicated by using a MIB.

With reference to the first aspect, in some implementations of the first aspect, the first system message is broadcast to the first area based on different sending directions, where the first system message sent in different sending directions includes a same configuration parameter.

When the first system message includes the content of SIB1, the first system message is required to be sent as a system message block at a cell level. Configurations in cells are completely the same, and parameters in the cell in all sending direction are consistent. Therefore, when the first system message is sent, corresponding configuration parameters in different broadcast beam directions also need to be consistent. This ensures uniformity of the measurement, and helps the user equipment to perform combined reception.

In this solution, configuration parameters and specific parameter values in the second system message sent by the first network device may be the same or may be different.

With reference to the first aspect, in some implementations of the first aspect, a third system message is broadcast to the first area, where the third system message includes a time-frequency resource configuration on a link between the first network device and the user equipment, access permission for the first network device, and a second scheduling indication, and the second scheduling indication is used for scheduling the first system message and the second system message.

In this solution, the first system message and the second system message are sent as OSI, and the first network device may broadcast the third system message, namely, SIB1 to the first area.

The second scheduling indication includes scheduling information and search space for the first system message and the second system message.

According to a second aspect, a communication method is provided. The method may be performed by user equipment, or may be performed by a chip or a circuit configured in the user equipment. This is not limited in this application.

The method includes: receiving a first system message in a first area, where the first area is a coverage area in which a first network device provides a service, and the first system message is used by the user equipment and the first network device to perform at least one of access, beam management, and mobility measurement in the first area; and receiving, in a second area, a second system message dedicated to the second area, where the second area includes a coverage area in which the first network device and a second network device overlap, and the second system message is used by the user equipment and the second network device to perform access and/or mobility measurement in the second area.

In this application, for content of the first network device, the second network device, the user equipment, and the region, refer to the first aspect. Details are not described again.

In this technical solution, the user equipment located in the overlapping coverage area (the second area) between the serving satellite (the first network device) and the neighboring satellite (the second network device) may receive the network configuration message (the first system message) about the serving satellite and the network configuration message (the second system message) about the neighboring satellite. The user equipment located in the coverage area (the first area) of the serving satellite but not in the overlapping coverage area receives only the network configuration message (the first system message) about the serving satellite, and the network configuration message (the second system message) about the neighboring satellite is not received. Therefore, system message sending overheads caused by sending the network configuration message of the neighboring satellite is sent in a non-overlapping region are avoided, so as to save a part of sending resources. The part of sending resources may be used to send data, thereby improving data transmission efficiency.

With reference to the second aspect, in some implementations of the second aspect, the first system message includes auxiliary access information used by the first network device to perform NTN access, and configuration information for measuring a synchronization signal.

In this application, the auxiliary access information may be understood as auxiliary information required by the user equipment for accessing the first network device in NTN scenarios. In this application, the configuration information for measuring the synchronization signal is a measurement configuration of the synchronization signal in a beam management process of the first network device, or a measurement configuration of the synchronization signal in a mobility management process during cell reselection or switching.

In this solution, the first system message reassembles a network configuration about the serving satellite in SIB2/4 and SIB 19 into a new OSI message.

With reference to the second aspect, in some implementations of the second aspect, the first system message includes a first criterion, and the first criterion is used by the user equipment to determine whether the user equipment is in the second area.

For example, the first criterion may include at least one of a distance threshold, a threshold of an angle to a reference point, an SSB index, and the like between the first criterion and a reference point.

The first criterion may alternatively be sent through another message, for example, a MIB message.

With reference to the second aspect, in some implementations of the second aspect, the second system message includes a second network device list, auxiliary access information used by the second network device to perform NTN access, configuration information used by the second network device to perform cell reselection, and configuration information for measuring a synchronization signal of the second network device.

In this application, the auxiliary access information of the second network device may be understood as auxiliary information required by the user equipment for accessing the second network device in the NTN scenario.

In this application, the configuration information used for cell reselection may include a related parameter of whether to perform cell reselection.

In this application, the configuration information for measuring the synchronization signal of the second network device may be understood as a related configuration for the user equipment to measure the synchronization signal of the second network device.

In this solution, the first system message reassembles the network configuration about the neighboring satellite in the SIB2 or 4 and the SIB19 into a new OSI message.

With reference to the second aspect, in some implementations of the second aspect, the first system message further includes a time-frequency resource configuration on a link between the first network device and the user equipment, an access permission for the first network device, and a first scheduling indication, and the first scheduling indication is used to schedule the second system message.

In this solution, in addition to the network configuration about the serving satellite in SIB2/4 and SIB19, the first system message further includes the content in SIB1, and a new SIB message is reassembled.

The first scheduling indication includes scheduling information and search space for the second system message.

The first system message may be scheduled and indicated by using a MIB.

With reference to the second aspect, in some implementations of the second aspect, the first system message in the first area is received based on different receiving directions, where the first system message received in different beam directions corresponds to a same configuration parameter.

When the first system message includes the content of SIB1, the first system message is required to be sent as a system message block at a cell level, and configurations in the cell are completely the same. Parameters in the cell in each sending direction are consistent. Therefore, when the first system message is sent, corresponding configuration parameters also need to be consistent in different broadcast beam directions. This ensures uniformity of the measurement, and helps the user equipment to perform combined reception.

In this solution, configuration parameters and specific parameter values in the second system message sent by the first network device may be the same or may be different.

With reference to the second aspect, in some implementations of the second aspect, a third system message in the first area is received, where the third system message includes a time-frequency resource configuration on a link between the first network device and the user equipment, an access permission for the first network device, and a second scheduling indication, and the second scheduling indication is used to schedule the first system message and the second system message.

In this solution, the first system message and the second system message is sent as the OSI, and the first network device may broadcast the third system message to the first area. That is, the SIB1.

The second scheduling indication includes scheduling information and search space for the first system message and the second system message.

According to a third aspect, a communication apparatus is provided. The apparatus may be a first network device, or may be a chip or a circuit configured in the first network device. This is not limited in this application.

The apparatus includes a transceiver unit, configured to broadcast a first system message to a first area, where the first area is a coverage area served by the first network device, and the first system message is used by user equipment and the first network device to perform at least one of access, beam management, and mobility measurement in the first area. The transceiver unit is further configured to broadcast a second system message to a second area, where the second area includes a coverage area in which the first network device and a second network device overlap, the second system message is used by the user equipment and the second network device to perform access and/or mobility measurement in the second area, and the second system message is a message dedicated to the second area.

With reference to the third aspect, in some implementations of the third aspect, the first system message includes auxiliary access information used by the first network device to perform NTN access, and configuration information for measuring a synchronization signal.

With reference to the third aspect, in some implementations of the third aspect, the first system message includes a first criterion, and the first criterion is used by the user equipment to determine whether the user equipment is in the second area.

With reference to the third aspect, in some implementations of the third aspect, the second system message includes a second network device list, auxiliary access information used by the second network device to perform NTN access, configuration information used by the second network device to perform cell reselection, and configuration information for measuring a synchronization signal of the second network device.

With reference to the third aspect, in some implementations of the third aspect, the first system message further includes a time-frequency resource configuration on a link between the first network device and the user equipment, an access permission for the first network device, and a first scheduling indication, and the first scheduling indication is used to schedule the second system message.

With reference to the third aspect, in some implementations of the third aspect, the transceiver unit is further configured to broadcast the first system message to the first area based on different sending directions, where the first system message sent in different sending directions includes a same configuration parameter.

With reference to the third aspect, in some implementations of the third aspect, the transceiver unit is further configured to broadcast a third system message to the first area, where the third system message includes a time-frequency resource configuration on a link between the first network device and the user equipment, an access permission for the first network device, and a second scheduling indication, and the second scheduling indication is used to schedule the first system message and the second system message.

According to a fourth aspect, a communication apparatus is provided. The apparatus may be user equipment, or may be a chip or a circuit configured in the user equipment. This is not limited in this application.

The apparatus includes a transceiver unit, configured to receive a first system message in a first area, where the first area is a coverage area in which a first network device provides a service, and the first system message is used by the user equipment and the first network device to perform at least one of access, beam management, and mobility measurement in the first area. The transceiver unit is configured to receive, in a second area, a second system message dedicated to the second area, where the second area includes a coverage area in which the first network device and a second network device overlap, and the second system message is used by the user equipment and the second network device to perform access and/or mobility measurement in the second area.

With reference to the fourth aspect, in some implementations of the fourth aspect, the first system message includes auxiliary access information used by the first network device to perform NTN access, and configuration information for measuring a synchronization signal.

With reference to the fourth aspect, in some implementations of the fourth aspect, the first system message includes a first criterion, and the first criterion is used by the user equipment to determine whether the user equipment is in the second area.

With reference to the fourth aspect, in some implementations of the fourth aspect, the second system message includes a second network device list, auxiliary access information used by the second network device to perform NTN access, configuration information used by the second network device to perform cell reselection, and configuration information for measuring a synchronization signal of the second network device.

With reference to the fourth aspect, in some implementations of the fourth aspect, the first system message further includes a time-frequency resource configuration on a link between the first network device and the user equipment, an access permission for the first network device, and a first scheduling indication, and the first scheduling indication is used to schedule the second system message.

With reference to the fourth aspect, in some implementations of the fourth aspect, the transceiver unit is further configured to receive the first system message in the first area based on different receiving directions, where the first system message received in different beam directions corresponds to a same configuration parameter.

With reference to the fourth aspect, in some implementations of the fourth aspect, the transceiver unit is further configured to receive a third system message to the first area, where the third system message includes a time-frequency resource configuration on a link between the first network device and the user equipment, an access permission for the first network device, and a second scheduling indication, and the second scheduling indication is used to schedule the first system message and the second system message.

According to a fifth aspect, a communication apparatus is provided. The apparatus is configured to perform the method provided in any one of the first aspect to the second aspect. Specifically, the communication apparatus may include a unit and/or a module configured to perform the method according to any one of the implementations of any one of the first aspect to the second aspect, for example, a processing unit and/or a communication unit.

In an implementation, the communication apparatus includes the communication unit and the processing unit. The communication unit may be a transceiver or an input/output interface. The processing unit may be at least one processor. Optionally, the transceiver may be a transceiver circuit. Optionally, the input/output interface may be an input/output circuit.

In another implementation, the communication apparatus is a chip, a chip system, or a circuit in a network device. When the communication apparatus is the chip, the chip system, or the circuit in the network device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a sixth aspect, a communication apparatus is provided. The communication apparatus includes a processor. Optionally, the communication apparatus further includes a memory. The processor is configured to control a transceiver to receive and send a signal, the memory is configured to store a computer program, and the processor is configured to invoke the computer program from the memory and run the computer program, so that the sending device performs the method in any one of the possible implementations of any one of the first aspect to the second aspect.

Optionally, there are one or more processors, and there are one or more memories.

Optionally, the memory may be integrated with the processor, or the memory and the processor are arranged separately.

Optionally, the network device further includes a transceiver. The transceiver may be specifically a transmitting machine (transmitter) and a receiving machine (receiver).

According to a seventh aspect, a computer-readable storage medium is provided. The computer-readable storage medium stores a computer program or code. When the computer program or the code run on a computer, the computer is caused to perform the method in any one of the possible implementations of any one of the first aspect and the second aspect.

According to an eighth aspect, a chip is provided. The chip includes at least one processor. The at least one processor is coupled to a memory. The memory is configured to store a computer program. The processor is configured to invoke the computer program from the memory and run the computer program, so that a sending device equipped with the chip system performs the method in any one of the possible implementations of any one of the first aspect to the second aspect.

The chip may include an input circuit or interface for sending information or data, and an output circuit or interface for receiving information or data.

According to a ninth aspect, a computer program product is provided. The computer program product includes computer program code. When the computer program code is run by a sending device, the method in any one of the possible implementations of any one of the first aspect and the second aspect is performed.

For beneficial effects of the third aspect to the ninth aspect, refer to the beneficial effects of the first aspect and the second aspect. Details are not described again.

### BRIEF DESCRIPTION OF DRAWINGS

FIG. 1 is a diagram of an architecture 100 of a communication system to which an embodiment of this application is applicable;
FIG. 2 is a diagram of an architecture 200 of a communication system to which an embodiment of this application is applicable;
FIG. 3 is a diagram of an architecture 300 of a communication system to which an embodiment of this application is applicable;
FIG. 4 is a diagram of an architecture 400 of a communication system to which an embodiment of this application is applicable;
FIG. 5 is a diagram of an architecture 500 of a communication system to which an embodiment of this application is applicable;
FIG. 6 is a diagram of coverage area of a plurality of satellites to which an embodiment of this application is applicable;
FIG. 7 is a diagram of a service range of a satellite applicable to which an embodiment of this application is applicable;
FIG. 8 is a diagram of a time-domain resource pattern occupied for sending a SIB to which an embodiment of this application is applicable;
FIG. 9 is a schematic flowchart of a communication method to which an embodiment of this application is applicable;
FIG. 10 is a diagram of a time-domain resource pattern occupied for sending a SIB to which an embodiment of this application is applicable;
FIG. 11 is a diagram of a time-domain resource pattern occupied for sending a SIB to which an embodiment of this application is applicable;
FIG. 12 is a block diagram of a structure of a communication apparatus to which an embodiment of this application is applicable; and
FIG. 13 is a block diagram of a structure of a communication apparatus to which an embodiment of this application is applicable; and

### DESCRIPTION OF EMBODIMENTS

The technical solutions in this application are to be described below with reference to the accompanying drawings.

The technical solutions provided in this application may be applied to various communication systems, such as a fifth generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a sixth generation mobile communication system. The technical solutions provided in this application may be further applied to sidelink (sidelink) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system.

The technical solutions in embodiments of this application are clearly described below with reference to the accompanying drawings in embodiments of this application. Apparently, the described embodiments are merely some rather than all embodiments of this application. All other embodiments obtained by a person of ordinary skill in the art based on embodiments of this application without creative efforts shall fall within the protection scope of this application.

A communication system applicable to this application is first briefly described below.

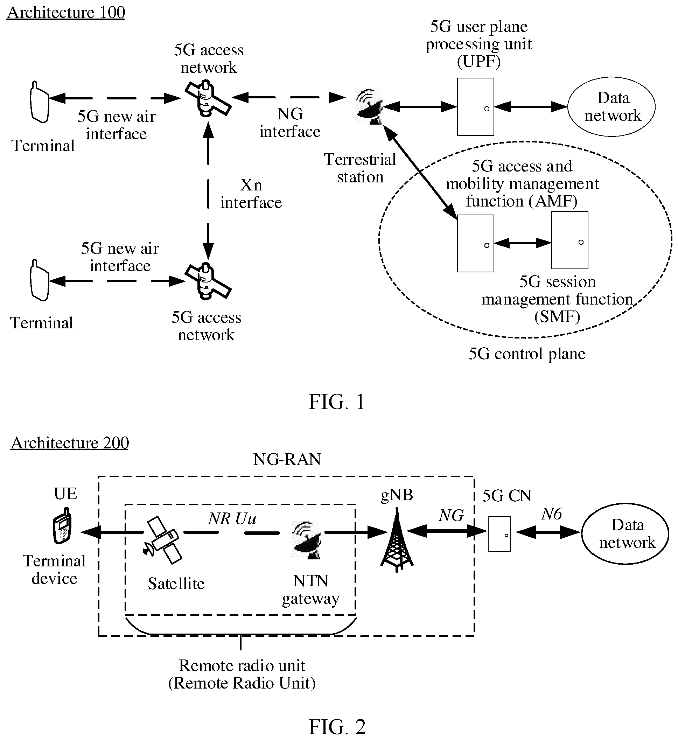

FIG. 1 is a diagram of an architecture 100 of a communication system to which an embodiment of this application is applicable. As shown in FIG. 1, a terrestrial mobile terminal UE accesses a network through a 5G new air interface. A 5G access network device is deployed on a satellite, and is connected to a terrestrial core network through a radio link. In addition, there is a radio link between satellites, to implement signaling exchange and user data transmission between access network devices. Network elements in FIG. 1 and interfaces of the network elements are described as follows.

A terminal device is a mobile device that supports the 5G new air interface, and is typically, for example, a mobile phone and a pad. The terminal device may access a satellite network through an air interface and initiate a service such as a call or network access.

A 5G access network device mainly provides a radio access service, schedules a radio resource for an access terminal, provides a reliable wireless transmission protocol, a reliable data encryption protocol, and the like, and is, for example, a base station.

A 5G core network provides services such as user access control, mobility management, session management, user security authentication, and charging. The 5G core network includes a plurality of functional units, and may be divided into a control plane functional entity and a data plane functional entity. An access and mobility management unit (access and mobility management function, AMF) is responsible for user access management, security authentication, and mobility management. A user plane unit (user plane function, UPF) is responsible for functions such as managing user plane data transmission and traffic statistics.

A terrestrial station is responsible for forwarding signaling and service data between a satellite access network device and the 5G core network.

A 5G new air interface is a radio link between the terminal and the access network device.

An Xn interface is an interface between the 5G access network device and the access network device, and is mainly for signaling exchange such as switching.

An NG interface is an interface between the 5G access network device and the 5G core network, and is mainly configured to exchange signaling such as higher layer signaling (non-access stratum, NAS) of the core network and service data of a user.

In a non-terrestrial network (non-terrestrial network, NTN), a plurality of NTN-based RAN architectures (NTN-RAN architectures) are defined. The following uses examples to describe RAN architectures applicable to the NTN.

FIG. 2 is a diagram of an architecture 200 of a communication system to which an embodiment of this application is applicable. A name of the architecture shown in FIG. 2 is a RAN architecture with a transparent satellite (RAN architecture with transparent satellite). As shown in FIG. 2, in a transparent (transparent) transmission scenario, a satellite is configured to implement frequency conversion and radio frequency amplification, and is equivalent to an analog radio frequency repeater. Therefore, the satellite replicates an NR-Uu radio interface signal from a feeder link (feeder link) (between an NTN gateway and the satellite) to a service link (service link) (between the satellite and UE), and vice versa. An NR-Uu interface signal is transmitted over a satellite radio interface (satellite radio interface, SRI) on the feeder link, that is, the satellite does not terminate the NR-Uu interface signal, but replicates the signal. The NTN gateway supports all necessary functions for forwarding the NR-Uu interface signal. Different transmission satellites may be connected to a same terrestrial gNB.

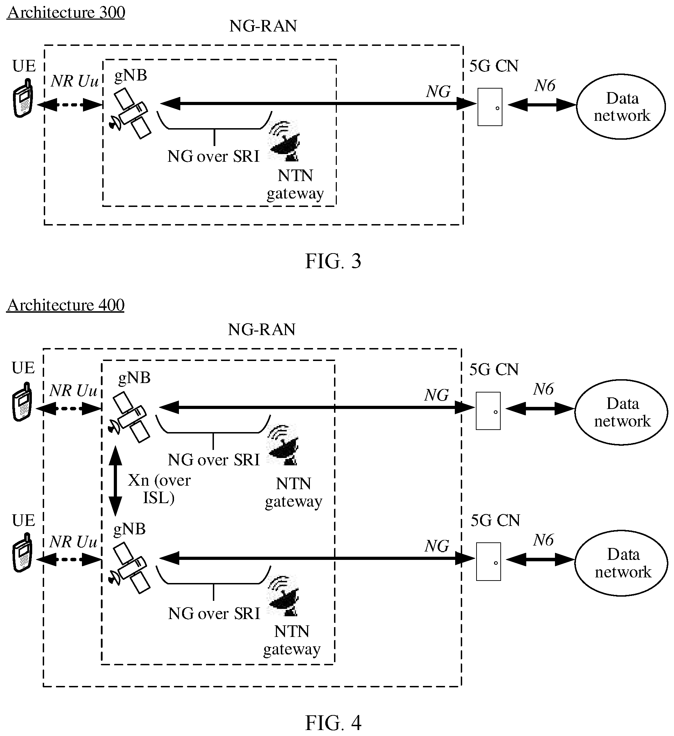

FIG. 3 is a diagram of another architecture 300 of a communication system to which an embodiment of this application is applicable. A name of the architecture shown in FIG. 3 is a regenerative satellite without an inter-satellite link (regenerative satellite without ISL (inter-satellite link, inter-satellite link)). In this architecture, the satellite serves as a base station to regenerate a signal received from the ground. In other words, an NR-Uu radio interface signal is transmitted on a service link between UE and the satellite, and a satellite radio interface (SRI) signal is transmitted on a feeder link between an NTN gateway and the satellite. An SRI is a transmission link between the NTN gateway and the satellite. An NG interface signal is transmitted to the NTN gateway through the SRI, and then forwarded by the NTN gateway to a terrestrial core network device. A process of transmitting the NG interface signal from the terrestrial core network device to a satellite base station is similar, and details are not described herein again.

FIG. 4 is a diagram of another architecture 400 of a communication system to which an embodiment of this application is applicable. A name of the architecture shown in FIG. 4 is a regenerative satellite with an inter-satellite link (regenerative satellite with ISL). In this scenario, a satellite also serves as a base station. A difference from the previous scenario is that an ISL exists in this scenario. The ISL is a transmission link between satellites. As shown in the foregoing figure, UE served by a base station on a satellite can access a 5G core network through the ISL. Base stations on different satellites may be connected to a same terrestrial 5G core network.

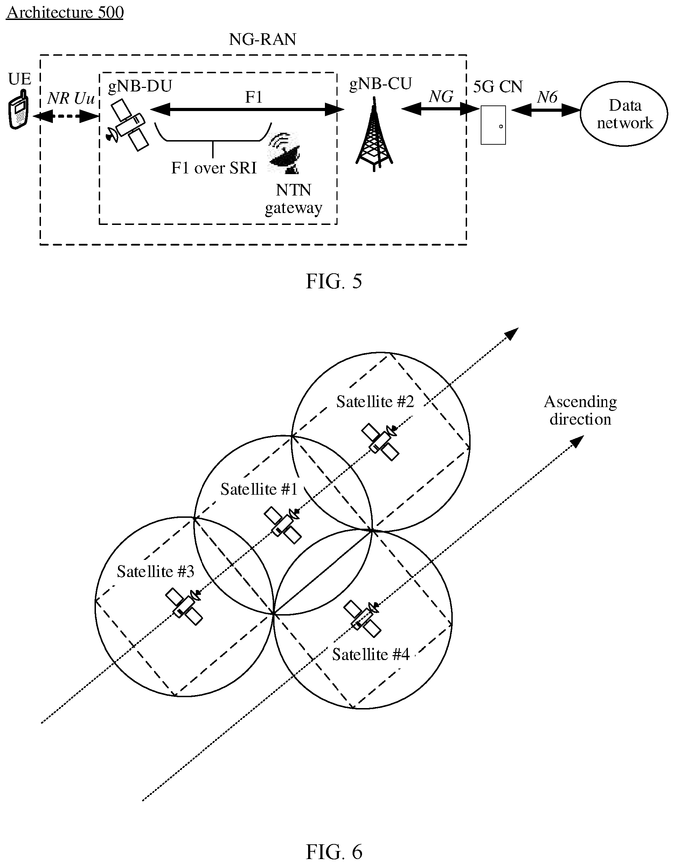

FIG. 5 is a diagram of another architecture 500 of a communication system to which an embodiment of this application is applicable. A name of the architecture shown in FIG. 5 is an NG-RAN with a regenerative satellite based on a gNB-DU (NG-RAN with a regenerative satellite based on gNB-DU). In this scenario, a CU and a DU of a base station are separated. The satellite serves as the DU of the base station on a satellite. The satellite regenerates a signal received from the ground. In other words, an NR-Uu radio interface signal is transmitted on a service link between UE and the satellite, and a satellite radio interface (SRI) signal is transmitted on a feeder link between an NTN gateway and the satellite. The satellite radio interface is a transmission link, and can transmit a logical interface F1 signal of a 3GPP standard. An F1 protocol signal is transmitted over the satellite radio interface. The satellite can provide an inter-satellite link ISL. The NTN gateway is a node at a transport network layer and supports all necessary transport protocols. DUs on different satellites may be connected to a same terrestrial CU.

It should be noted that the foregoing RAN architectures are merely examples for description, and may be further used in another NTN architecture, or in 4G, 5G, or a future wireless network architecture. This is not limited in embodiments of this application.

Generally, a satellite communication system may deliver a synchronization signal block (SSB) to a user via broadcast beams in several different directions. The SSB is used for terminal synchronization in an initial access phase. In comparison with a terrestrial network, satellite communication has a wider coverage area, a higher transmission loss, and a higher moving speed. Therefore, an NTN system requires far more broadcast beams than a terrestrial system. For example, it is defined by the terrestrial system that broadcast beams corresponding to 8 SSBs (FR1) or 64 SSBs (FR2) can cover a service range of a single base station, and the NTN system may require hundreds or even thousands of broadcast beams.

For example, an NTN system at an orbital altitude of 600 km is used as an example, and a service range of a single satellite of the NTN system may reach hundreds of thousands of square kilometers. To overcome impact of a path loss caused by a transmission distance and ensure communication service quality, the satellite usually uses a large-scale antenna array to provide a higher array gain. However, this also results in a narrower main lobe of a beam. For example, a coverage radius of a 3 dB beamwidth is only 10-plus kilometers, and a coverage area is about hundreds of square kilometers. In this case, thousands of beams are required to implement seamless coverage of a single satellite service range using narrow beams. Further, even if specific widening is performed on the beams, to ensure a gain level, hundreds of beams are required to implement coverage.

For example, 256 SSB broadcast beams are sent. Based on an SSB sending pattern configured in FR1 in a current protocol, 8 SSBs are sent in first 2 ms of every 20 ms, which may be considered as a group. Therefore, the 256 SSB beams need to be divided into 32 groups in total. Each group requires duration of 20 ms, and completely sending the 256 broadcast beams requires duration of 640 ms in total. In each group, the SSB is included only in first 2 ms, and normal data can be sent in the remaining 18 ms.

Refer to FIG. 6. In an example, FIG. 6 is a diagram of coverage areas of a plurality of satellites. Considering that a specific relative relationship is maintained between orbits when the satellites travel along the orbits, seamless coverage of an entire constellation can be ensured when a coverage area of each satellite is a rectangle. A satellite #1, a satellite #2, a satellite #3, and a satellite #4 shown in FIG. 6 are used as an example. When coverage areas of the satellite #1, the satellite #2, the satellite #3, and the satellite #4 are all rectangles, comprehensiveness of coverage can be ensured.

It may be understood that each satellite may host one or more cells, and the one or more cells carried by the satellite may provide a service for a corresponding service area.

It may be understood that the foregoing quantity of satellites is merely an example for description, and the coverage area may further include another satellite. This is not limited in embodiments of this application.

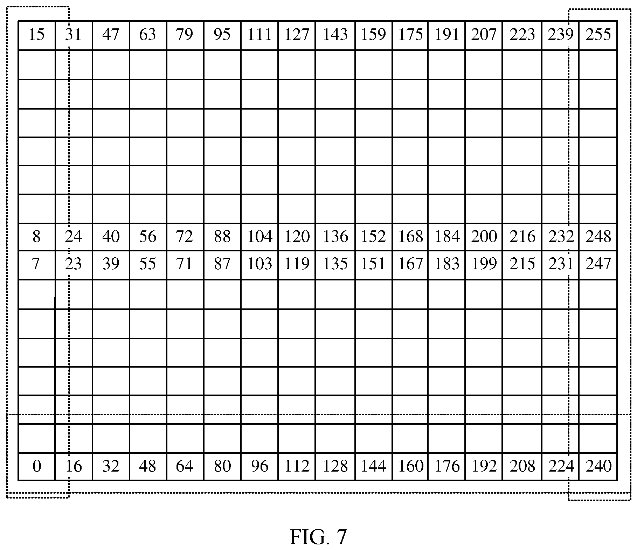

Refer to FIG. 7. In an example, FIG. 7 is a diagram of a service range of a satellite. For example, the service range of the satellite is evenly divided into 256 areas. In other words, 256 SSB beams are required to cover the service range of the satellite, and each SSB beam corresponds to one area.

In addition to an SSB, communication further delivers various system messages required for networks and access services to users via broadcast beams in different directions, to indicate configurations related to network communication. The system messages mainly include a master information block (MIB) and system message blocks (SIBs). The MIB and the SSB are generally coupled into a synchronization signal and physical broadcast channel block (SS/PBCH block) for sending, and the SIBs are broadcast after the SS/PBCH block is sent.

SIB messages are described in detail below.

In NR NTN protocols, a base station delivers network-side configurations to each user mainly by broadcasting a system message to the user by performing time-division sweeping using beams in different directions. Generally, only a user that performs initial access or a user in an idle state/inactive state needs to obtain network configuration parameters and changes by receiving the system message, and a user in a connected state may obtain network configuration parameters and changes by using RRC signaling. As of the 3GPP Release 17 standard, a total of 21 different types of system messages: SIB1 to SIB21, have been defined in the NR protocols. In NTN scenarios, commonly used SIB types that are slightly different from those in a terrestrial cellular mainly include SIB1, SIB2/4, and SIB19.

Different types of system messages carry different content. SIB1 includes access permission for a serving satellite, defines a scheduling indication of OSI, and further indicates Unified configuration information of the serving satellite, including uplink and downlink frequencies, an initial bandwidth part (bandwidth part, BWP), an SSB sending periodicity, a sending index, and the like. SIB2/4 includes information related to intra-frequency/inter-frequency cell reselection, mainly including a measurement frequency, signal strength, a measurement window configuration corresponding to the frequency, a measurement window configuration smtc4 of a neighboring satellite, and the like. SIB19 is newly added in the NTN scenario, and includes many satellite auxiliary information for NTN access, mainly including configurations of the serving satellite (an ephemeris, TA information, a cell-level Koffset, and epoch time), a distance reference point and threshold for switching, configurations of the neighboring satellite, and the like.

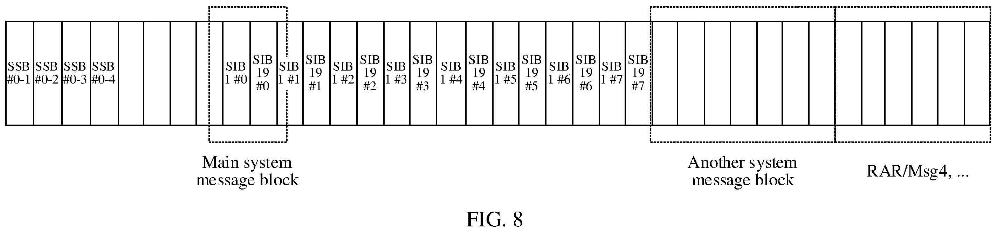

Refer to FIG. 8. In an example, FIG. 8 is a diagram of a pattern of time-domain resources occupied for SIB sending. Using 20 ms as an example, an SSB is sent in first 2 ms; in subsequent slots, main system message blocks such as SIB1 and SIB19 are sent, and other system message blocks such as SIB2 and SIB4 may also be sent.

It may be learned that various types of system messages need to be sent in each broadcast beam direction, so that it can be ensured that a user in a coverage area can access a network. Therefore, resource overheads of the system messages are directly proportional to both a quantity of broadcast beams and a quantity of types of sent SIBs.

Based on the above, it may be learned that auxiliary access information of a serving satellite and a neighboring satellite and measurement configuration information of the serving satellite and the neighboring satellite are separately coupled to a plurality of different types of system messages. Considering that network configurations related to the serving satellite is necessary for access and transmission, the system messages all need to be sent in a satellite coverage area, that is, on each broadcast beam. In addition, because the system messages have a large amount of content, a total quantity of bits that need to be sent is generally large, especially for ephemeris information (for example, SIB19 needs to be completely sent in one slot). However, each system message needs to occupy an independent time-frequency resource. In this case, if the system message is sent based on the time-domain pattern shown in FIG. 8, time-domain resources that can be used for data transmission would be greatly compressed, and account for only 10%. Actually, although the configurations related to the serving satellite are necessary, network configurations of the neighboring satellite for cell switching or reselection takes effect only when the user is located in an overlapping area between satellites. In comparison with a coverage area of a single satellite, a proportion of the overlapping area between the satellites is smaller. Sending the configurations related to the neighboring satellite in all broadcast beam directions is a blatant waste of time-frequency resources for sending the system message. In conclusion, the configurations related to the serving satellite and the neighboring satellite are coupled to a same type of a system message, and sent in a full coverage area via broadcast, which greatly preempts data sending resources and reduces data transmission efficiency.

In view of this, embodiments of this application provide a communication solution, to enable a serving satellite to send system configuration information of a neighboring satellite only in a broadcast beam direction at a coverage edge, thereby reducing total sending overheads of system messages and improving system data transmission efficiency.

A communication method provided in embodiments of this application is described in detail below with reference to the accompanying drawings. Embodiments provided in this application may be applied to the communication systems shown in FIG. 1 to FIG. 5. This is not limited.

The solution of this application is described in detail below.

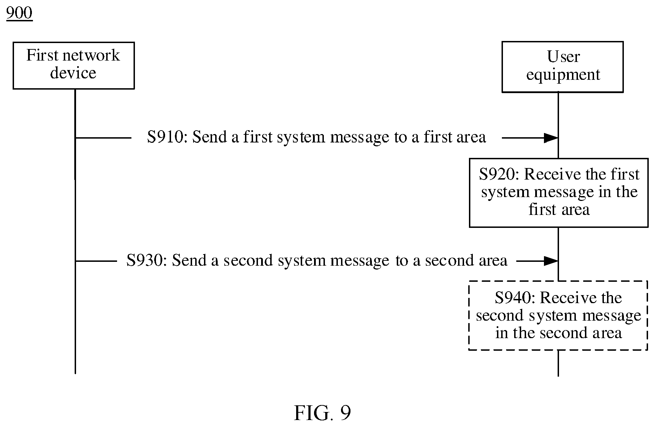

FIG. 9 is a schematic flowchart of a communication method according to an embodiment of this application. For ease of description, the method 900 is illustratively described below by using an example in which an execution body is a first network device. It may be understood that the first network device may alternatively be a component (for example, a chip or a circuit) of a network device. This is not limited. The method 900 is also applicable to a chip system of the first network device.

In this application, the first network device may be a serving satellite or an access network device of the serving satellite. This is not limited in this application.

The first network device may provide a network service for a first area. In other words, the first area is a coverage area served by the first network device. For example, user equipment in the first area may access the first network device, or the user equipment in the first area may perform beam management or mobility measurement via the first network device. This is not limited in embodiments of this application.

In this application, the user equipment may be a terminal device. This is not limited in embodiments of this application.

In this application, a second network device may be a neighboring satellite of the serving satellite or access network device of the serving satellite. The second network device may include one or more network devices. This is not limited in embodiments of this application.

For example, as shown in FIG. 6, the satellite #1 is a serving satellite, and the satellite #2, the satellite #3, and the satellite #4 are neighboring satellites of the satellite #1. It should be noted that, the serving satellite may have one or more neighboring satellites. A quantity of neighboring satellites is not limited embodiments of this application.

In this application, an area may be understood as a geographical area covered by a satellite service, and different geographical areas correspond to different areas. For example, a geographical area #1 corresponds to the first area, and a geographical area #2 corresponds to a second area.

For example, a geographical area in which the first network device provides a network service is the first area, a geographical area in which the second network device provides a network service is a third area, and an overlapping coverage area between the first network device and the second network device is the second area. That is, in the second area, both the first network device and the second network device may provide an access service or a mobility measurement service for the user equipment, the second area is a part of the first area, and the second area is also a part of the third area.

In this application, a coverage area of one network device may correspond to one or more cells. For example, the first network device hosts one cell, and provides a service for the first area via the cell. Alternatively, the first network device may host a plurality of cells, and provides a service for the first area via the plurality of cells.

In this application, division of the geographical area may be implemented based on an H3 geospatial grid system, or may be implemented based on a Fibonacci (Fibonacci) geographical grid division manner. This is not limited in embodiments of this application.

The method 900 shown in FIG. 9 may include the following steps.

S910: The first network device broadcasts a first system message to the first area.

The first network device sends the first system message to the user equipment in the first area by sending broadcast beams in different directions to the first area.

The first system message is used by the user equipment to perform, in the first area, at least one of access, beam management, and mobility measurement with the first network device.

In this application, that the user equipment performs access includes that the user equipment performs random access.

In this application, that the user equipment performs mobility measurement includes performing synchronization signal measurement caused by movement of the user equipment or movement of the first network device. The synchronization signal measurement is synchronization signal measurement performed during cell reselection or switching.

In this application, that the user equipment performs beam management includes synchronization signal measurement used for maintaining beam alignment with the first network device. The synchronization signal measurement is synchronization signal measurement required during beam sweeping and failure recovery in a beam management procedure.

For example, the first area corresponds to one cell. In this case, the user equipment does not need to perform cell switching in the first area, and the user equipment may perform beam management in the first area.

For example, the first area corresponds to a plurality of cells. In this case, the user equipment may perform reselection or switching in the plurality of cells in the first area, that is, perform mobility measurement.

In a possible implementation, the first system message may include auxiliary access information used by the first network device for NTN access and configuration information used for synchronization signal measurement.

It may be understood that the synchronization signal measurement may be used for cell switching or reselection, or may be used for beam management.

In this application, the auxiliary access information of the first network device may be understood as auxiliary information required by the user equipment for accessing the first network device in NTN scenarios.

For example, the auxiliary access information may include ephemeris information, TA information, a cell-level K_{offset}, epoch time, and the like.

For example, the auxiliary access information includes all auxiliary access information of the serving satellite in SIB19, and the auxiliary access information may include ntn-Config-r17, t-Service-r17, referenceLocation-r17, and the like.

In this application, configuration information used by the first network device for synchronization signal measurement may be understood as a parameter configuration used for synchronization signal measurement.

For example, the configuration information may include a frequency of a cell, signal strength, and a measurement window configuration corresponding to the frequency.

For example, the configuration information includes configuration information used for intra-frequency/inter-frequency cell reselection and/or beam management in SIB2/4, and the configuration information may include smtc, ss-RSSI-Measurement (signal strength), ssb-ToMeasure, and the like in intraFreqCellReselectionInfo.

In this application, the cell reselection may be reselection between a cell corresponding to the first area and a cell corresponding to the second area, or may be reselection between a plurality of cells corresponding to the first area.

Optionally, the first system message may further include a first criterion, and the first criterion is used by the user equipment to determine whether the user equipment is in the second area.

For example, the first criterion may include at least one of a threshold of a distance to a reference point, a threshold of an angle to a reference point, an SSB index, and the like.

The first criterion may be sent by using the first system message, a MIB, or another message. This is not limited in embodiments of this application.

S920: The user equipment receives the first system message in the first area.

In this application, the user equipment is in the first area, the user equipment may receive the first system message, and the user equipment may perform, in the first area, at least one of access, beam management, and mobility measurement with the first network device based on the first system message.

For details about the first system message and at least one of the access, the beam management, and the mobility measurement, refer to the descriptions in S910. The details are not described again.

S930: The first network device broadcasts a second system message to the second area.

The first network device sends the second system message to user equipment in the second area by sending broadcast beams in different directions to the second area.

The second system message is used by the user equipment to perform, in the second area, access and/or mobility measurement with the second network device.

The second system message is a system message dedicated to the second area.

In an optional understanding, the second system message is sent only to the second area, and is not sent to an area in the first area other than the second area. In other words, the first network device sends the second system message only to an overlapping coverage area between the first network device and the second network device, and does not send the second system message to a non-overlapping coverage area. That is, the user equipment in the second area may receive the first system message, and may receive the second system message. However, user equipment in a remaining area in the first area other than the second area may receive the first system message, but does not receive the second system message.

It should be noted that, in this application, the first network device broadcasts the second system message to the second area. Actually, an area in which the first network device broadcasts the second system message may be slightly greater than the second area.

In a possible implementation, the second system message may include a second network device list, auxiliary access information used by the second network device for NTN access, configuration information used for cell reselection, and configuration information for measuring a synchronization signal of the second network device.

In this application, the auxiliary access information of the second network device may be understood as auxiliary information required by the user equipment for accessing the second network device in the NTN scenario.

For example, the auxiliary access information may include all auxiliary access information of a neighboring satellite in SIB19, and the auxiliary access information may include distanceThresh-r17, ntn-NeighCellConfigList-r17, NTN-NeighCellConfig-r17 in the list, and the like.

In this application, the configuration information used for cell reselection may include a parameter regarding whether to perform cell reselection.

For example, the configuration information includes configuration information used for intra-frequency/inter-frequency cell reselection in SIB2/4, and the configuration information may include cell-ReselectionInfoCommon and cellReselectionServingFreqInfo.

In this application, cell reselection for the second system message may be the reselection between the cell corresponding to the first area and the cell corresponding to the second area.

In this application, the configuration information used for measuring the synchronization signal of the second network device may be understood as a configuration related to measuring the synchronization signal of the second network device by the user equipment.

For example, the configuration information may include signal strength, a measurement window configuration of the neighboring satellite, and the like.

For example, the configuration information includes measurement configuration information of the neighboring satellite in SIB2/4, and the configuration information may include smtc4 and ssb-ToMeasure in intraFreqCellReselectionInfo.

In a possible implementation, the first network device may broadcast a third system message to the first area.

The third system message includes a time-frequency resource configuration on a link between the first network device and the user equipment, access permission for the first network device, and a second scheduling indication, and the second scheduling indication is used for scheduling the first system message and the second system message.

The access permission for the first network device includes access permission for a terminal device and access permission for an access network device.

The second scheduling indication includes scheduling information and search space for the first system message and the second system message.

For example, the third system message is SIB1.

In this case, the first system message and a second system message are two pieces of reassembled OSI. After sending SIB1, the first network device may send the first system message or the second system message.

It may be understood that, in different sending directions, configuration parameters and specific parameter values in the first system message sent by the first network device may be the same or may be different, and configuration parameters and specific parameter values in the second system message sent by the first network device may be the same or may be different.

For example, the first network device broadcasts the first system message to the first area based on different directions, and configuration parameters included in the first system message sent in the different sending directions may be the same or may be different.

For example, the first network device broadcasts the second system message to the second area based on different directions, and configuration parameters included in the second system message sent in the different sending directions may be the same or may be different.

In another possible implementation, the first system message may further include a time-frequency resource configuration on a link between the first network device and the user equipment, access permission for the first network device, and a first scheduling indication, and the first scheduling indication is used for scheduling the second system message.

The first scheduling indication includes scheduling information and search space for the second system message.

The first system message may be scheduled and indicated by using a MIB.

In a possible understanding, the first system message includes content of SIB1.

In this case, the first system message may be understood as a reassembled system message block, and the second system message is still reassembled OSI. The first network device does not need to send a third system message.

It should be understood that, the first system message, as a system message block, is a basis for accessing a network device and is required to be sent at a cell level. Configurations in cells are completely the same, and parameters in the cell in all sending direction are consistent. Therefore, when the first system message is sent, corresponding configuration parameters in different broadcast beam directions also need to be consistent. This ensures uniformity of the measurement, and helps the user equipment to perform combined reception.

It may be understood that configuration parameters and specific parameter values in the second system message sent by the first network device may be the same or may be different.

Reassembling manners of the foregoing two system messages are illustratively described below.

Manner 1: The first system message and the second system message are reassembled OSI.

Specifically, the auxiliary access information of the serving satellite and the configuration information used for synchronization signal measurement in SIB19 and SIB2/4 are reassembled into one piece of OSI, which for example, may be denoted as SIB-bis. A list of the neighboring satellite, the auxiliary access information, the configuration information used for cell reselection, and the configuration information for synchronization signal measurement in SIB19 and SIB2/4 are reassembled into one piece of OSI, which, for example, may be denoted as SIB-neighbor.

The first network device may send SIB-bis and SIB1 to the first area, and the first network device may send SIB-neighbor to the second area.

For example, as shown in FIG. 7, it is assumed that the 256 areas shown in FIG. 7 are coverage areas of the first network device, and areas in dashed-line boxes is overlapping coverage areas between the first network device and the second network device. In this case, the first network device may send SIB-bis and SIB1 to the 256 areas, and the first network device may send SIB-neighbor to the areas in the dashed-line boxes. That is, SIB-neighbor does not need to be sent to another area (an area in the 256 areas other than the areas in the dashed-line boxes). Therefore, SIB-neighbor needs to be sent in only 18% beam directions in the edge areas. As a result, resource overheads occupied by the system messages can be reduced by about 30%.

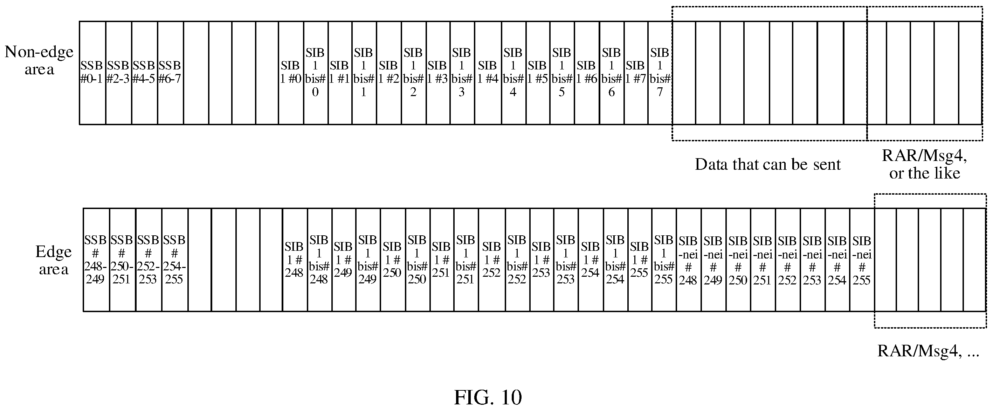

Refer to FIG. 10. In an example, FIG. 10 is a diagram of a pattern of time-domain resources occupied for SIB sending according to an embodiment of this application.

Using 20 ms as an example, an SSB is sent in first 2 ms, and a main system message block and another system message block are sent in subsequent slots.

For a non-edge area, after sending the SSB, the first network device may send SIB1 and SIB-bis in the subsequent slots, for example, SIB1 #0/SIB-bis #0, and SIB1 #1/SIB-bis #1 shown in the figure.

For an edge area, after sending the SSB, SIB1, and SIB-bis, the first network device may send SIB-neighbor in a subsequent slot, for example, SIB-neighbor #248, SIB-neighbor #249 shown in the figure.

The edge area may be understood as the overlapping coverage area between the first network device and the second network device (the second area), and the non-edge area is an area in the coverage area of the first network device other than the overlapping coverage area (the remaining region in the first area other than the second area).

In conclusion, the first network device may send, only in the beam direction at the coverage edge or in a beam direction that overlaps that of the neighboring cell, a system message (SIB-neighbor) that carries a network configuration related to the second network device, and send, in another beam direction, system messages (SIB1 and SIB-bis) that carry a network configuration related to the first network device. In comparison with FIG. 8, in FIG. 10, SIB-neighbor does not need to be sent in the non-edge area, thereby reducing a part of resource overheads, and improving data sending efficiency.

Manner 2: The first system message is a reassembled system message block, and the second system message is reassembled OSI.

Specifically, the auxiliary access information of the serving satellite, configuration information used for synchronization signal measurement, and the content of SIB1 in SIB19 and SIB2/4 are reassembled into a system message block similar to SIB1, which, for example, may be denoted as SIB-serve. A list of the neighboring satellite, the auxiliary access information, the configuration information used for cell reselection, and the configuration information used for measuring the synchronization signal in SIB19 and SIB2/4 are reassembled into one piece of OSI, for example, may be denoted as SIB-neighbor.

The first network device may send SIB-serve to the first area, and the first network device may send SIB-neighbor to the second area.

For example, as shown in FIG. 7, it is assumed that the 256 areas shown in FIG. 7 are coverage areas of the first network device, and areas in dashed-line boxes are overlapping coverage areas between the first network device and the second network device. In this case, the first network device may send SIB-serve to the 256 areas, and the first network device may send SIB-neighbor to the areas in the dashed-line boxes. That is, SIB-neighbor does not need to be sent to another area (an area in the 256 areas other than the areas in the dashed-line boxes). Therefore, SIB-neighbor needs to be sent in only 18% beam directions in the edge areas. As a result, resource overheads occupied by the system message can be reduced by about 30%.

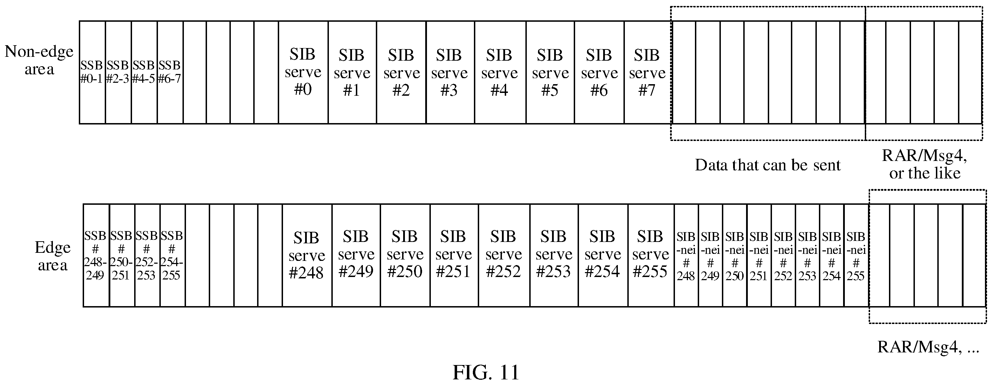

Refer to FIG. 11. In an example, FIG. 11 is a diagram of a pattern of time-domain resources occupied for SIB sending according to an embodiment of this application.

Using 20 ms as an example, an SSB is sent in first 2 ms, and a main system message block and another system message block are sent in subsequent slots.

For a non-edge area, after sending the SSB, the first network device may send SIB-serve in the subsequent slot, for example, SIB-serve#0 and SIB-serve #1 shown in the figure.

For an edge area, after sending the SSB and SIB-serve, the first network device may send SIB-neighbor in the subsequent slot, for example, SIB-neighbor #248 and SIB-neighbor #249 shown in the figure.

The edge area may be understood as the overlapping coverage area between the first network device and the second network device (the second area), and t and the non-edge area is an area in the coverage area of the first network device other than the overlapping coverage area (the remaining region in the first area other than the second area).

In conclusion, the first network device may send, only in the beam direction at the coverage edge or in a beam direction that overlaps that of the neighboring cell, a system message (SIB-neighbor) that carries a network configuration related to the second network device, and send, in another beam direction, a system message (SIB-serve) that carries a network configuration related to the first network device. In comparison with FIG. 8, in FIG. 11, SIB-neighbor does not need to be sent in the non-edge areas, thereby reducing a part of resource overheads, and improving data sending efficiency.

S940: The user equipment receives the second system message in the second area.

In this application, the user equipment is in the second area, the user equipment may receive the second system message, and the user equipment may perform, in the second area, access and/or mobility measurement with the second network device based on the second system message.

For details about the second system message and the access and/or the mobility measurement, refer to the descriptions in S930. The details are not described again.

In a possible implementation, the user equipment may determine, based on the first criterion in the first system message, whether the user equipment is in the second area.

When determining that the user equipment is in the second area, the user equipment receives the second system message.

When determining that the user equipment is not in the second area, the user equipment does not receive the second system message. In this case, the user equipment may perform access and/or mobility management with the first network device. Alternatively, the user equipment may wait, until a next serving satellite provides a service, to perform access and/or mobility management. Alternatively, the user equipment may receive the second system message after moving to the second area, and perform, in the second area, access and/or mobility measurement with the second network device based on the second system message.

Based on the foregoing technical solutions, a new design method is proposed for system information in the NTN, to resolve excessively high sending resource overheads and excessively low data transmission efficiency caused because the serving satellite sends the network configuration information of the serving satellite and the network configuration information of the neighboring satellite in the full coverage area in an integrated manner. Specifically, the network configuration of the serving satellite and the network configuration of the neighboring satellite that are originally coupled are separated, and two different types of OSI are defined, to respectively carry access assistance and measurement parameters of the serving satellite and access assistance and measurement parameters of the neighboring satellite. Further, different types of OSI are sent via a beam at the coverage edge and a beam in another direction, to reduce a quantity of sending beams for the network configuration of the neighboring satellite, thereby reducing resource overheads of sending the system message in the full coverage area of the satellite.

In another implementation, the network configuration of the serving satellite and the network configuration of the neighboring satellite that are originally coupled are separated, and new SIB1 and new OSI are defined, to respectively carry a unified network configuration, access assistance and measurement parameters of the serving satellite, and access assistance and measurement parameters of the neighboring satellite. Further, new OSI is sent via a beam at the coverage edge and new SIB1 is sent via a beam in another direction, thereby reducing a quantity of sending beams for the network configuration of the neighboring satellite, and reducing resource overheads of sending the system message in the full coverage area of the satellite. In addition, a user can perform combined reception of a plurality of system messages for necessary configuration information of the serving satellite, thereby improving a success rate of signal demodulation.

It should be understood that another possible implementation of embodiments of this application is similar to the foregoing method 900, and reference may be made to the descriptions in the method 900. Details are not described herein.

It should be understood that sequence numbers of the foregoing processes do not mean execution sequences. The execution sequence of the processes should be determined based on functions and internal logic of the processes, and should not be construed as any limitation on implementation processes of embodiments of this application.

The foregoing mainly describes the solutions provided in embodiments of this application from a perspective of exchange between network elements. It may be understood that, to implement the foregoing functions, each network element such as a transmitter device or a receiver device includes a corresponding hardware structure and/or software module for performing each function. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the transmitter device or the receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

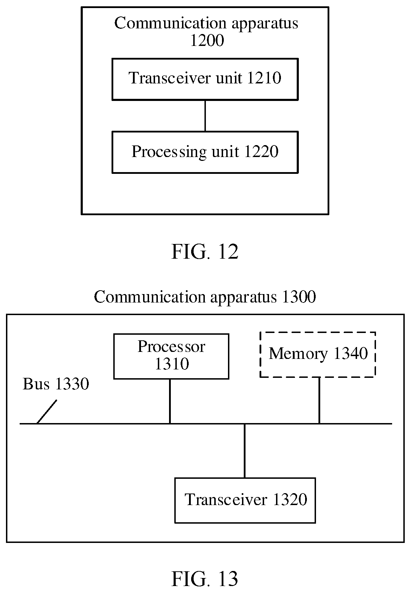

The method provided in embodiments of this application is described above in detail with reference to FIG. 9. An apparatus provided in embodiments of this application is described in detail below with reference to FIG. 12 and FIG. 13. It should be understood that descriptions of apparatus embodiments correspond to the descriptions of the method embodiments. Therefore, for content that is not described in detail, refer to the method embodiments. For brevity, details are not described herein again.

FIG. 12 is a diagram of a structure of a communication apparatus according to an embodiment of this application.

The apparatus 1200 includes a transceiver unit 1210 and a processing unit 1220. The transceiver unit 1210 may be configured to implement a corresponding communication function. The processing unit 1220 may be configured to perform data processing.

Optionally, the transceiver unit 1210 may also be referred to as a communication interface or a communication unit, and includes a sending unit and/or a receiving unit. The transceiver unit 1210 may be a transceiver (including a transmitter and/or a receiver), an input/output interface (including an input interface and/or an output interface), a pin, a circuit, or the like. The transceiver unit 1210 may be configured to perform a sending step and/or a receiving step in the foregoing method embodiments.

Optionally, the processing unit 1220 may be a processor (may include one or more processors), a processing circuit having a processor function, or the like, and may be configured to perform a step other than sending and receiving in the foregoing method embodiments.

Optionally, the apparatus 1200 further includes a storage unit. The storage unit may be a memory, an internal storage unit (for example, a register or a cache), an external storage unit (for example, a read-only memory or a random access memory), or the like. The storage unit is configured to store instructions. The foregoing processing unit 1220 executes the instructions stored in the storage unit, to enable the communication apparatus to perform the foregoing method.

In a design, the apparatus 1200 may be configured to perform an action performed by the first network device in the foregoing method embodiments. For example, the apparatus 1200 may be configured to perform an action performed by the first network device in the foregoing method 900. In this case, the apparatus 1200 may be a component of a terminal device. The transceiver unit 1210 is configured to perform a receiving/sending-related operation on a first network device side in the foregoing method embodiments, and the processing unit 1220 is configured to perform a processing-related operation of the first network device in the foregoing method embodiments.

For example, the transceiver unit 1210 is configured to broadcast a first system message to a first area, where the first area is a coverage area served by the first network device, and the first system message is used by user equipment and the first network device to perform at least one of access, beam management, and mobility measurement in the first area. The transceiver unit 1210 is further configured to broadcast a second system message to a second area, where the second area includes a coverage area in which the first network device and a second network device overlap, the second system message is used by the user equipment and the second network device to perform access and/or mobility measurement in the second area, and the second system message is a message dedicated to the second area.

For another example, the transceiver unit 1210 is further configured to broadcast the first system message to the first area based on different sending directions, where the first system message sent in different sending directions includes a same configuration parameter.

For another example, the transceiver unit 1210 is further configured to broadcast a third system message to the first area, where the third system message includes a time-frequency resource configuration on a link between the first network device and the user equipment, an access permission for the first network device, and a second scheduling indication, and the second scheduling indication is used to schedule the first system message and the second system message.

It should be understood that the transceiver unit 1210 and the processing unit 1220 may further perform another operation performed by the first network device in the foregoing method 900. Details are not described one by one herein.

In a design, the apparatus 1200 may be configured to perform an action performed by the user equipment in the foregoing method embodiments. For example, the apparatus 1200 may be configured to perform an action performed by the user equipment in the foregoing method 900. In this case, the apparatus 1200 may be a component of the user equipment. The transceiver unit 1210 is configured to perform a receiving/sending-related operation on user equipment side in the foregoing method embodiments, and the processing unit 1220 is configured to perform a processing-related operation of the user equipment side in the foregoing method embodiments.

For example, the transceiver unit 1210 is configured to receive a first system message in a first area, where the first area is a coverage area in which a first network device provides a service, and the first system message is used by the user equipment and the first network device to perform at least one of access, beam management, and mobility measurement in the first area. The transceiver unit 1210 is configured to receive, in a second area, a second system message dedicated to the second area, where the second area includes a coverage area in which the first network device and a second network device overlap, and the second system message is used by the user equipment and the second network device to perform access and/or mobility measurement in the second area.

For another example, the transceiver unit 1210 is further configured to broadcast the first system message to the first area based on different sending directions, where the first system message sent in different sending directions includes a same configuration parameter.

For another example, the transceiver unit 1210 is further configured to receive a third system message in the first area, where the third system message includes a time-frequency resource configuration on a link between the first network device and the user equipment, an access permission for the first network device, and a second scheduling indication, and the second scheduling indication is used to schedule the first system message and the second system message.

It should be understood that the transceiver unit 1210 and the processing unit 1220 may further perform another operation performed by the user equipment in the foregoing method 900. Details are not described one by one herein.

It should be further understood that the apparatus 1200 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1200 may be specifically the network device in the foregoing embodiments, and may be configured to perform procedures and/or steps corresponding to the network device in the foregoing method embodiments. To avoid repetition, details are not described herein again.

The apparatus 1200 in the foregoing solutions has a function of implementing a corresponding step performed by the device in the foregoing methods, or the apparatus 1200 in the foregoing solutions has a function of implementing a corresponding step performed by the network device in the foregoing methods. The functions may be implemented by hardware, or may be implemented by hardware executing corresponding software. The hardware or software includes one or more modules corresponding to the foregoing function. For example, a transceiver unit may be replaced with a transceiver (for example, a sending unit in the transceiver unit may be replaced with a transmitter, and a receiving unit in the transceiver unit may be replaced with a receiving machine), and another unit such as a processing unit may be replaced with a processor, to separately perform sending and receiving operations and a related processing operation in the method embodiments.

In addition, the transceiver unit 1210 may alternatively be a transceiver circuit (which, for example, may include a receiving circuit and a sending circuit), and the processing unit may be a processing circuit.

It should be noted that the apparatus in FIG. 12 may be the network element or the device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

FIG. 13 is a diagram of a communication architecture according to an embodiment of this application. A communication apparatus 1300 shown in FIG. 13 includes a processor 1310 and a transceiver 1320. Optionally, the processor 1310 and the transceiver 1320 may be connected to each other through a bus 1330. The communication apparatus 1300 may be a terminal device or a network device.

Optionally, the communication apparatus 1300 may further include a memory 1340. The memory 1340 includes but is not limited to a random access memory (random access memory, RAM), a read-only memory (read-only memory, ROM), an erasable programmable read only memory (erasable programmable read only memory, EPROM), or a compact disc read-only memory (compact disc read-only memory, CD-ROM). The memory 1340 is configured to store related instructions and data.

The processor 1310 is coupled to the memory 1340, and is configured to execute the instructions stored in the memory 1340, to control the transceiver 1320 to send a signal and/or receive a signal.

It should be understood that the foregoing processor 1310 and the memory 1340 may be integrated into one processing apparatus, and the processor 1310 is configured to execute program code stored in the memory 1340 to implement the foregoing functions. During a specific implementation, the memory 1340 may alternatively be integrated into the processor 1310, or may be independent of the processor 1310. It should be understood that the processor 1310 may also correspond to each processing unit in the foregoing communication apparatus, and the transceiver 1320 may correspond to each receiving unit and each sending unit in the foregoing communication apparatus.

It should be further understood that the transceiver 1320 may include a receiver (or referred to as a receiving machine) and a transmitter (or referred to as a transmitting machine). The transceiver may further include an antenna. There may be one or more antennas. The transceiver may alternatively be a communication interface or an interface circuit.

Specifically, the communication apparatus 1300 may correspond to the first network device in the method 900 according to embodiments of this application. The communication apparatus 1300 may include units of the method performed by the first network device in the method 900. It should be understood that a specific process in which the units perform the foregoing corresponding steps is described in detail in the foregoing method embodiments, and for brevity, details are not described herein.

Specifically, the communication apparatus 1300 may correspond to the user equipment in the method 900 according to embodiments of this application. The communication apparatus 1300 may include units of the method performed by the user equipment in the method 900. It should be understood that a specific process in which the units perform the foregoing corresponding steps is described in detail in the foregoing method embodiments, and for brevity, details are not described herein.

When the communication apparatus 1300 is a chip, the chip includes an interface unit and a processing unit. The interface unit may be an input/output circuit or a communication interface. The processing unit may be a processor, a microprocessor, or an integrated circuit integrated on the chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed through a hardware decoding processor, or may be performed and completed through a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps in the foregoing methods in combination with hardware of the processor.

This application further provides a computer-readable medium, storing a computer program thereon. When the computer program is executed by a computer, a function of any one of the foregoing method embodiments is implemented.

This application further provides a computer program product. When the computer program product is executed by a computer, a function of any one of the foregoing method embodiments is implemented.

All or some of the foregoing embodiments may be implemented through software, hardware, firmware, or any combination thereof. When software is used to implement embodiments, all or a part of embodiments may be implemented in a form of a computer program product. The computer program product includes one or more computer instructions. When the computer instructions are loaded and executed on a computer, processes or functions in embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, a computer, a server, or a data center to another website, another computer, another server, or another data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid state disk, SSD)), or the like.

In embodiments of this application, words such as "example" or "for example" are used to represent giving an example, an illustration, or a description. Any embodiment or design solution described as an "example" in this application should not be interpreted as being more preferred or advantageous than other embodiments or design solutions. Exactly, the use of the example is intended to present the concept in a specific manner.

It should be understood that "embodiment" mentioned throughout the specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that in this application, "when" and "if" both mean that UE or a base station performs corresponding processing in an objective situation, but do not constitute any limitation on time, do not require the UE or the base station to perform a determining action during implementation, and do not mean other limitations exists.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of..." in this specification represents all or any combination of the listed items. For example, "at least one of A, B, and C" may represent the following six cases: only A exists, only B exists, only C exists, both A and B exist, both B and C exist, and A, B, and C all exist. In this specification, "at least one" means one or more. "A plurality of' means two or more.

It should be understood that, in embodiments of this application, terms "comprise", "include", "have", and variants thereof all mean "include but not limited to", unless otherwise specially emphasized in another manner.

It should be understood that, in various embodiments of this application, first, second, and various numerical numbers are merely used for differentiation for ease of description, and are not used to limit the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual coupling or direct coupling or communication connection may be implemented through some interfaces. The indirect coupling or communication connection between the apparatuses or units may be implemented in electronic, mechanical, or other forms.

The units described as separate components may or may not be physically separated, and the components displayed as units may or may not be physical units, and may be located in one place or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, performed by a first network device or a chip system of the first network device, wherein the method comprises:
broadcasting a first system message to a first area, wherein the first area is a coverage area served by the first network device, and the first system message is used by user equipment to perform, in the first area, at least one of access, beam management, and mobility measurement with the first network device; and
broadcasting a second system message to a second area, wherein the second area comprises an overlapping coverage area between the first network device and a second network device, the second system message is used by the user equipment to perform, in the second area, access and/or mobility measurement with the second network device, and the second system message is a message dedicated to the second area.

2. The method according to claim 1, wherein the first system message comprises auxiliary access information used by the first network device for NTN access, and configuration information used for synchronization signal measurement.

3. The method according to claim 1 or 2, wherein the first system message comprises a first criterion, and the first criterion is used by the user equipment to determine whether the user equipment is in the second area.

4. The method according to claim 1, wherein the second system message comprises a second network device list, auxiliary access information used by the second network device for NTN access, configuration information used for cell reselection, and configuration information used for measuring a synchronization signal of the second network device.

5. The method according to any one of claims 2 to 4, wherein the first system message further comprises a time-frequency resource configuration on a link between the first network device and the user equipment, access permission for the first network device, and a first scheduling indication, and the first scheduling indication is used for scheduling the second system message.

6. The method according to claim 5, wherein the broadcasting the first system message to the first area comprises:
broadcasting the first system message to the first area based on different sending directions, wherein the first system message sent in the different sending directions comprises a same configuration parameter.

7. The method according to any one of claims 2 to 4, wherein the method further comprises:
broadcasting a third system message to the first area, wherein the third system message comprises a time-frequency resource configuration on a link between the first network device and the user equipment, access permission for the first network device, and a second scheduling indication, and the second scheduling indication is used for scheduling the first system message and the second system message.

8. A communication method, performed by user equipment or a chip system of the user equipment, wherein the method comprises:
receiving a first system message in a first area, wherein the first area is a coverage area in which a first network device provides a service, and the first system message is used by the user equipment to perform, in the first area, at least one of access, beam management, and mobility measurement with the first network device; and
receiving, when being in a second area, a second system message dedicated to the second area, wherein the second area comprises an overlapping coverage area between the first network device and a second network device, and the second system message is used by the user equipment to perform, in the second area, access and/or mobility measurement with the second network device.

9. The method according to claim 8, wherein the first system message comprises auxiliary access information used by the first network device for NTN access, and configuration information used for synchronization signal measurement.

10. The method according to claim 8 or 9, wherein the first system message comprises a first criterion, and the first criterion is used by the user equipment to determine whether the user equipment is in the second area.

11. The method according to claim 8, wherein the second system message comprises a second network device list, auxiliary access information used by the second network device for performing NTN access, configuration information used for cell reselection, and configuration information used for measuring a synchronization signal of the second network device.

12. The method according to any one of claims 9 to 11, wherein the first system message further comprises a time-frequency resource configuration on a link between the first network device and the user equipment, access permission for the first network device, and a first scheduling indication, and the first scheduling indication is used for scheduling the second system message.

13. The method according to claim 12, wherein the receiving the first system message in the first area comprises:
receiving the first system message in the first area based on different receiving directions, wherein the first system message received in different beam directions corresponds to a same configuration parameter.

14. The method according to any one of claims 9 to 11, wherein the method further comprises:
receiving a third system message in the first area, wherein the third system message comprises a time-frequency resource configuration on a link between the first network device and the user equipment, access permission for the first network device, and a second scheduling indication, and the second scheduling indication is used for scheduling the first system message and the second system message.

15. A communication apparatus, comprising a unit configured to perform the method according to any one of claims 1 to 7 or claims 8 to 14.

16. A communication apparatus, comprising a processor, wherein the processor is coupled to a memory, the memory is configured to store a computer program or instructions, and the processor is configured to execute the computer program or the instructions in the memory, to cause the apparatus to perform the method according to any one of claims 1 to 7, or perform the method according to any one of claims 8 to 14.

17. A computer-readable storage medium, wherein the computer-readable storage medium stores a computer program or instructions, and when the computer program or the instructions are run on a computer, the computer is caused to perform the method according to any one of claims 1 to 7 or the method according to any one of claims 8 to 14.

18. A chip system, comprising a processor, configured to invoke a computer program from a memory and run the computer program, to cause a communication device equipped with the chip system to perform the method according to any one of claims 1 to 7, or perform the method according to any one of claims 8 to 14.

19. A computer program product, wherein when the computer program product runs on a computer, the computer is caused to perform the steps of the method according to any one of claims 1 to 7 or the steps of the method according to any one of claims 8 to 14.
